# EUROPEAN PATENT APPLICATION

(11) **EP 3 428 046 A1**
(43) Date of publication of application: **16.01.2019**
(21) Application number: 17181189.6
(22) Date of filing: 13.07.2017
(51) Int. Cl.: B62D 53/06, B60P 1/64

(54) **A TRAILER**

(71) Applicant: Parator Industri AB, 821 24 Bollnäs (SE); Gustavsson, Börje, 175 47 Järfälla (SE)
(72) Inventor: Olsson, Per, 823 30 KILAFORS (SE)
(74) Representative: Bjerkéns Patentbyrå KB (Gävle)

(57) **Abstract**

A trailer (1) has a frame (2), a bogie (5) and a load carrier (14) connected to the frame. The bogie is displaceable along the frame in the longitudinal direction thereof by the control of a first power member (13). The load carrier is also displaceable along the frame in the longitudinal direction thereof by control of a second power member (17).

## Description

### TECHNICAL FIELD OF THE INVENTION AND BACKGROUND ART

The present invention relates to a trailer comprising
- a longitudinal frame being in a front end region thereof provided with a member configured to connect the trailer to a turntable of a vehicle, such as a truck or another trailer, for being supported thereby,
- a bogie with at least one wheel axle connected to the frame in a rear end region thereof for making the trailer resting on the ground by wheels of said axle, and
- a load carrier connected to and arranged on the frame for carrying a load.

When such a trailer is connected to a truck for be driven on roads allowing a restricted length of a truck trailer combination, such as 12 meters, the trailer provides a larger distance between the rear wheel axle thereof and the front axle of the truck than the distance between the front wheel axle and the rear wheel axle of a tipping lorry, so that it may carry more load than the latter.

A trailer of this type may also be a part of longer truck trailer combinations and may then also be connected to a vehicle in the form of another trailer.

There is of course an ongoing attempt to improve such a trailer, such as to increase the possible load to be transported by a truck trailer combination to which it belongs.

### SUMMARY OF THE INVENTION

The object of the present invention is to provide a trailer of the type defined in the introduction being improved in at least some aspect with respect to such trailers already known.

This object is according to the invention obtained by providing such a trailer with the features listed in the characterizing part of appended patent claim 1.

By the displaceability of the bogie along the frame in the longitudinal direction thereof the position of the bogie with respect to the frame may be adjusted to be an optimum for the actual use of the trailer. The bogie may for instance be displaced along the frame towards said member for connecting the frame to a vehicle when this vehicle is a truck to make the length of this truck trailer combination to be allowed on roads only allowing a restricted length or be displaced in the opposite direction for enlarging the distance separating the front wheel axle of a truck and the rear most wheel axle of a truck trailer combination of which it forms a part and in which the rear wheel axle of the trailer bogie may be said rear most wheel axle.

The displaceability of the load carrier along the frame makes it possible to position the load carrier and by that the load on the frame to obtain an optimum uniform distribution of the weight of a vehicle trailer combination to which the trailer belongs onto the different wheel axles of that combination. In the case of a load carrier being tiltable with respect to the frame for unloading it by tipping out a load the load carrier may, when this has to be done, still be displaced with respect to the frame to a position suitable for that action. When the trailer is connected to a truck the load carrier may be displaced along the frame to a position ensuring a sufficient load on the drive axles of the truck.

According to an embodiment of the invention said bogie has at least two said wheel axles making it suitable to be a part of not only a truck trailer combination to be driven on roads only allowing a restricted length of such a combination in the order of 12 meters but also in longer truck trailer combinations for driving on roads allowing a total length thereof of at least 24 meters, such as 25.25 meters.

According to another embodiment of the invention the bogie is provided with a turntable in the region of a rear wheel axle thereof configured to allow another trailer to be connected to the trailer at the rear end thereof. The trailer according to the invention may by this feature together with another trailer and a truck form a long truck trailer combination, and said another trailer is advantageously also a trailer according to the present invention, so that the order of the two trailers behind the truck may be arbitrary and any of them may be the one connected to the truck would suddenly only one be allowed to be towed by the truck. The load carrier will in such a truck trailer combination with two trailers according to the invention on the front trailer be displaced along the frame towards the front of the truck for obtaining a sufficient load on the drive axles of the truck, and the load carrier on the rear trailer will be displaced in the opposite direction, possibly as much as possible, with respect to the frame of that trailer for obtaining a uniform distribution of weight upon the wheel axles of the two trailers of the truck trailer combination. This way of distributing the load carriers will together with a displacement of the bogies thereof to increase the distance between the front axle of the truck and the rear wheel axle of the rear trailer result in a high allowable load to be carried by the truck trailer combination.

According to another embodiment of the invention the trailer comprising an assembly controllable to tilt the load carrier with respect to the frame for unloading it by tipping out a load. A trailer according to the invention is particularly suitable for transporting loads to be unloaded by tipping it out of the load carrier, such as loads in the form of tarmac, gravel or the like, since the load carrier is displaceable with respect to the frame, which means that the load carrier has not to be in a position allowing such tipping when the trailer is moving but in a position being most appropriate for the driving behavior of the vehicle trailer combination in question.

According to another embodiment of the invention the bogie is displaceable along the frame between two end positions located at least 1.5 meter, at least 2 meters or at least 2.5 meters apart.

Such a displaceability of the bogie enables it to be adapted to an optimum to the use thereof, such as a position making the trailer short for enabling it to be a part of a truck trailer combination with a restricted length and to be as long as possible for increasing wheel axle distances of a truck trailer combination to a maximum.

According to another embodiment of the invention the load carrier is displaceable along the frame between two end positions located at least 1 meter, at least 1.5 meter or at least 2 meters apart. The advantages of the displaceability of the load carrier are in this embodiment considerable.

According to another embodiment of the invention said first and second power members are hydraulic power cylinders, which may then suitably be connected to the hydraulic system present on a truck to which a trailer may be connected.

According to another embodiment of the invention said first connecting arrangement comprises guide channels on the frame and members on the bogie displaceably received in the guide channels, and according to another embodiment of the invention said second connecting arrangement also comprises guide channels on the frame and members on the load carrier displaceably received in the guide channels.

According to another embodiment of the invention said members displaceably received in said guide channels are discs of synthetic material configured to slide in said guide channels. Another preferred possibility to realize said members displaceably received in said guide channels is to make them to be displaced in said guide channels by rolling therein, such as by being small wheels or pulleys.

The invention also relates to a truck trailer combination for driving on roads allowing a large total length thereof for example at least 24 meters, which comprises a truck, first trailer having at least two said wheel axles and which bogie is provided with a turntable in the region of a rear wheel axle thereof connected to the truck and a second such trailer connected to the turntable of the first trailer. In such a truck trailer combination the bogie of each trailer may be displaced as far as possible towards the rear end of the truck trailer combination for allowing a maximum weight of the truck trailer combination, whereas the load carriers of the two trailers may be displaced in opposite directions to increase the distance thereof for enabling said sufficient load on the drive axles of the truck and the uniform distribution of the weight on the wheel axles of the trailers, respectively.

The invention also relates to a method for driving a truck trailer combination according to the invention with loads on the load carriers on the trailers on a road allowing such a truck trailer combination for delivering the load to a location inside a geographical region with roads having a lower admissible load than the roads outside this region and only allowing a restricted length of a truck trailer combination being approximately the half of said total length, such as 12 meters, which is characterized by the steps listed in the characterizing part of the appended independent method claim. A determined total load to be transported by a truck trailer combination from a location in a region allowing a said total length of a truck trailer combination to a location only allowing a restricted length thereof may by this way to proceed be moved from the first location to the second location by driving a minimum distance and by that considerably reducing the fuel consumption resulting in reduced emissions and an improved environmental impact as well as a saving of time and by that a further cost reduction.

Further advantages as well as advantageous features of the invention will appear from the description following below.

### BRIEF DESCRIPTION OF THE DRAWINGS

With reference to the appended drawings, below follows a specific description of embodiments of the invention cited as examples.

In the drawings:
- Fig. 1: is a perspective view from below of a trailer according to an embodiment of the invention,
- Fig. 2: is a perspective view from above of the trailer shown in Fig. 1,
- Fig. 3: is an enlarged perspective view of a part of the front of the trailer shown in Fig. 1,
- Fig. 4: is a simplified view illustrating a trailer according to the present invention in one state connected to a truck,
- Fig. 5: is a simplified view of the trailer shown in Fig. 4 in an alternative state connected to a truck,
- Fig. 6: is a simplified view illustrating a known combination of a tipping lorry and a known trailer,
- Fig. 7: is a simplified view of the tipping lorry according to Fig. 6 alone,
- Fig. 8: is a simplified view of a truck trailer combination according to the present invention with two consecutive trailers according to the invention connected to a truck, and
- Fig. 9: is a simplified view showing a trailer according to the invention connected to a truck and in a state allowing tipping out of a load.

### DETAILED DESCRIPTION OF EMBODIMENTS OF THE PRESENT INVENTION

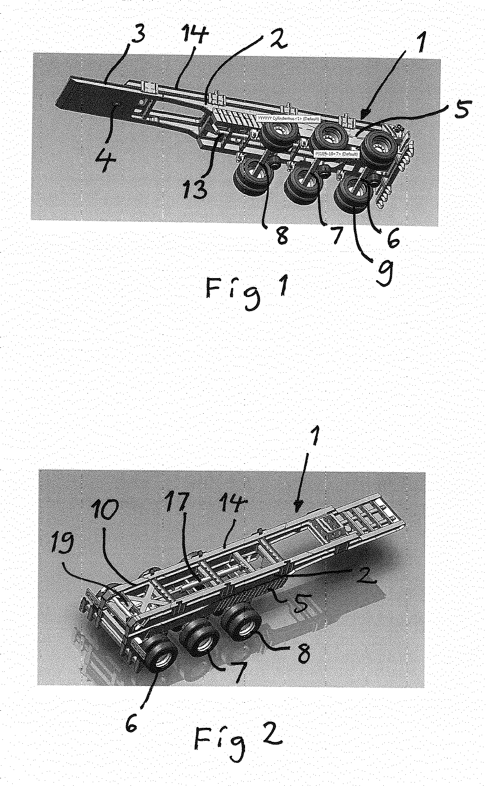

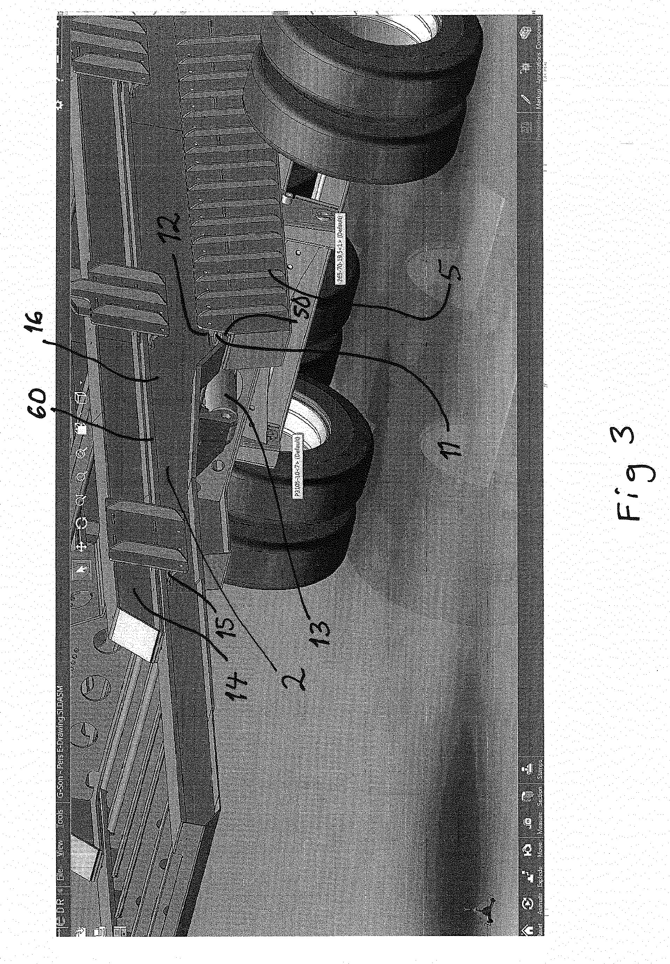

A trailer according to an embodiment of the invention will now be described by making reference to Figs. 1, 2 and 3. The trailer 1 has a longitudinal frame 2 being in a front end region 3 thereof provided with a member 4, a so called king pin, configured to connect the trailer to a turntable of a vehicle, such as a truck or another trailer, for being supported thereby.

The trailer has a bogie 5 with three wheel axles 6-8 with wheels 9 and is connected to the frame 2 in the rear end region 10 thereof for making the trailer resting on the ground by the wheels 9 of the wheel axles 6-8.

The bogie 5 is displaceable along the frame 2 in the longitudinal direction thereof by being connected to the frame through a first connecting arrangement in the form of discs 11 of synthetic material connected to the bogie received in guide channels 12 provided by a lower longitudinal flange 50 on the frame 2. A first power member 13 in the form of an hydraulic power cylinder is arranged to act between the frame and the bogie so as to displace the bogie with respect to the frame in the longitudinal direction of the frame to change the distance separating the connecting member 4 and by that the front axle of a truck when connected to a truck and the rear wheel axle 6 of the bogie.

The trailer has also a load carrier 14 connected to and arranged on the frame for carrying a load. The load carrier is connected to the frame by a second connecting arrangement including discs 15 of synthetic material connected to the load carrier received in guide channels 16 provided by an upper longitudinal flange 60 on the frame so as to make the load carrier displaceable along the frame in the longitudinal direction thereof. A second power member 17 in the form of a hydraulic power cylinder is for this sake arranged to displace the load carrier 14 with respect to the frame 2 in the longitudinal direction of the trailer to change the position of the load carrier with respect to the member 4 to connect the trailer to a vehicle.

Finally, the bogie 5 is provided with a turntable 19 in the region of a rear wheel axle 6 thereof configured to allow another trailer to be connected to the trailer at the rear end thereof. Thus, in a trailer according to the invention the bogie and the load carrier may be displaced with respect to the frame in the longitudinal direction thereof to obtain different relative positions suitable for the actual situation and the task to be carried out by the trailer.

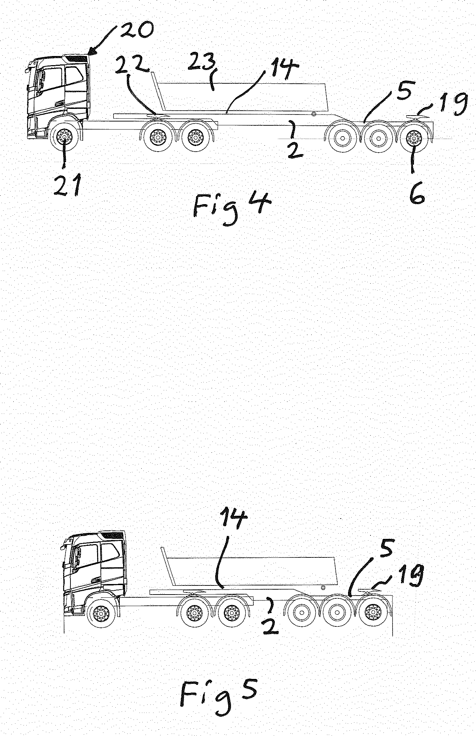

One possible state of a trailer 1 according to the present invention with three wheel axles and connected to the turntable 22 of a truck 20 is shown in Fig. 4. It is shown how the bogie 5 is displaced with respect to the frame 2 to a rear position for obtaining a maximum distance between the front axle 21 of the truck and the rear wheel axle 6 of the trailer for obtaining a maximum allowed load to be carried by this truck trailer combination. The load carrier 14 with the load 23 is here in a position resulting in a uniform distribution of weight upon the wheels of the truck and the trailer.

Fig. 5 is a view of the truck trailer combination shown in Fig. 4 in another possible state in which the bogie 5 has been displaced with respect to the frame 2 towards the front end region thereof to a position making the truck trailer combination short to be able to be driven in a geographical region only allowing a restricted length of a truck trailer combination, such as 12 meters. The load carrier 14 has been displaced slightly towards the front end region of the frame to obtain a uniform distribution of weight upon the wheels of the truck and the trailer. This truck trailer combination may in this state be in the order of 3 meters shorter than in the state shown in Fig. 4.

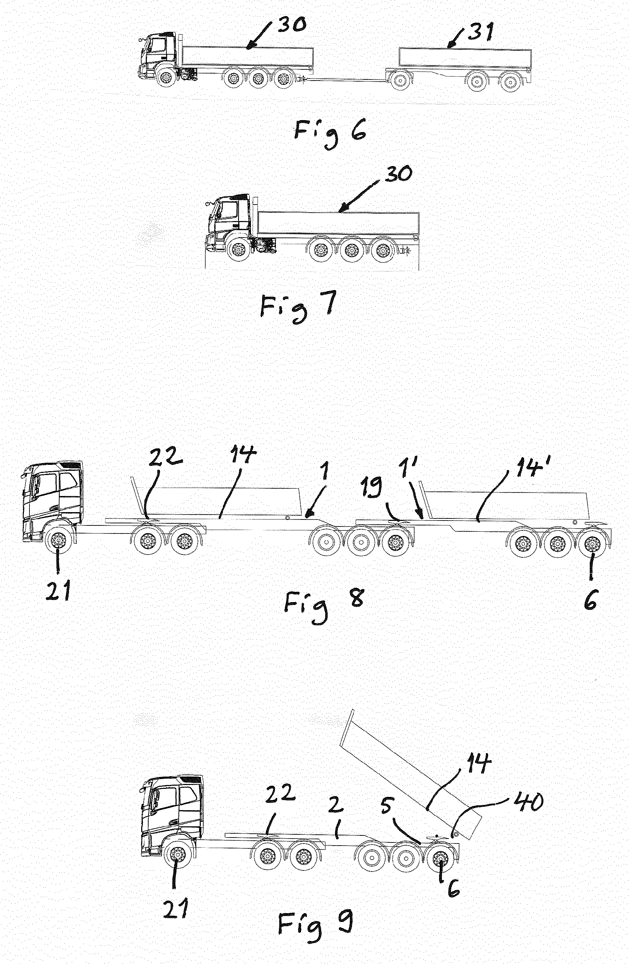

Some of the benefits of a trailer according to the present invention will now be explained while describing a particular work to be carried out thereby and compare it with how this work is today carried out by known equipment. We assume that 1 000 tons tarmac is to be transported form a position A 30 km on a road allowing a truck trailer combination of 24 meters and having a high admissible load (BK1 in Sweden) and then further 10 km to a location B inside a geographical region with roads having a lower admissible load than the roads outside this region and only allowing a restricted length of a trailer combination, here 12 meters. When this is done with a known combination of a tipping lorry 30 with four wheel axles and a trailer 31 connected thereto as shown in Fig. 6 this combination has 18 meters between the front axle of the lorry 30 and the rear axle of the trailer and a load of 8.5 tons may be transported on the lorry and of 8.5 tons on the trailer. This means that this combination has to make 59 journeys to transport the load of 1 000 tons to the border of said geographical region. When reaching this border the trailer 31 will be disconnected and the lorry as shown in Fig. 7 may transport a load of 8.5 tons to the location B for unloading, which means 119 journeys within this geographical region. The emission of CO₂ will be 3 468 kg for the long journeys and 2 038 kg for the short journeys inside said geographical region.

When this is instead done with a trailer according to the present invention a truck trailer combination shown in Fig. 8 will be used for the longer journeys. By having a first trailer 1 according to the invention connected to the truck 20 with the bogie 5 displaced away from the truck and a second trailer 1' according to the invention connected thereto it is possible to obtain a distance of 20.4 meters from the front axle 21 of the truck to the rear wheel axle 6 of the second trailer 1' allowing a total load of 26 tons, 13 tons on each trailer to be transported by this truck trailer combination on the roads with the higher admissible load (BK1). This combination with a trailer with three wheel axles may transport even more load on BK4 roads. It is seen how the load carrier 14 with load on the first trailer 1 is displaced as far as possible towards the front of this combination for obtaining a sufficient load on the drive axles of the truck, whereas the load carrier 14' with load on the second trailer 1' is displaced towards the end of this trailer for obtaining a uniform distribution of weight upon the wheel axles of this truck trailer combination. This truck trailer combination has only to make 38 journeys to come to said border of a geographical region resulting in CO₂ emissions of 2 596 kg and by that 872 kg less than the known combination with a saving of 290 liters diesel in addition to a considerable time saving. When reaching said border the second trailer 1' is disconnected and the bogie of the first trailer 1 is displaced towards the front of the truck for obtaining the state shown in Fig. 5 making the truck trailer combination to be within the 12 meters limit with a distance between the front axle of the truck and the rear wheel axle of the trailer to be 9.9 meters instead of 6.5 meters for the tipping lorry. This means that a load of 13 tons may then be transported to the location for unloading. When reaching this location the load carrier 14 will be displaced with respect to the frame of the trailer towards the end to reach a position suitable for unloading, and it is shown in Fig. 9 how the trailer is provided with an assembly 40 controllable to tilt the load carrier with respect to the frame for unloading it by tipping out a load. The truck will then be driven to the boarder for disconnecting the first trailer 1 and connecting the second trailer 1' thereto with the bogie displaced towards the front of the truck for be driven to the location for unloading of the load thereon. This results in totally 77 such journeys within said geographical region and CO₂ emissions of 1 419 kg, which is 619 kg less than for the known tipping lorry with a saving of 206 liters diesel in addition to the considerable saving of time.

The invention is of course in no way restricted to the embodiments disclosed above, but many possible modifications thereof will be obvious for a person skilled in the art without departing from the scope of the invention as defined in the appended claims.

The different lengths and load weights mentioned are to be interpreted just as examples and may vary for observing law requirements in different countries.

The number of wheel axles of the trailer may be other than shown in the figures.

It may of course also be possible to connect a further, third, trailer, to the second one in Fig. 8 if the legislation allows this.

## Claims

1. A trailer comprising
• a longitudinal frame (2) being in a front end region (3) thereof provided with a member (4) configured to connect the trailer to a turntable (22) of a vehicle, such as a truck or another trailer, for being supported thereby,
• a bogie (5) with at least one wheel axle (6-8) connected to the frame in a rear end region (10) thereof for making the trailer resting on the ground by wheels (9) of said axle, and
• a load carrier (14) connected to and arranged on the frame for carrying a load,
**characterized in that** it further comprises
• a first connecting arrangement configured to connect the bogie (5) to the frame (2) to be displaceable along the frame in the longitudinal direction thereof,
• a first power member (13) controllable to displace the bogie (5) with respect to the frame (2) in the longitudinal direction of the frame to change the distance separating said member (4) for connecting the frame to a vehicle and by that the front axle (21) of a truck when connected to a truck and the rear wheel axle (6) of the bogie,
• a second connecting arrangement configured to connect the load carrier (14) to the frame to be displaceable along the frame (2) in the longitudinal direction thereof, and
• a second power member (17) controllable to displace the load carrier (14) with respect to the frame in said longitudinal direction to change the position of the load carrier with respect to said member (4) to connect the trailer to a vehicle.

2. A trailer according to claim 1, **characterized in that** said bogie (5) has at least two said wheel axles (6-8).

3. A trailer according to claim 1 or 2, **characterized in that** the bogie (5) is provided with a turntable in the region of a rear wheel axle (6) thereof configured to allow another trailer to be connected to the trailer at the rear end thereof.

4. A trailer according to any of the preceding claims, **characterized in that** it comprises an assembly (40) controllable to tilt the load carrier (14) with respect to the frame (2) for unloading it by tipping out a load.

5. A trailer according to any of the preceding claims, **characterized in that** the bogie (5) is displaceable along the frame (2) between two end positions located at least 1.5 meter, at least 2 meters or at least 2.5 meters apart.

6. A trailer according to any of the preceding claims, **characterized in that** the load carrier (14) is displaceable along the frame (2) between two end positions located at least 1 meter, at least 1.5 meter or at least 2 meters apart.

7. A trailer according to any of the preceding claims, **characterized in that** said first and second power members (13, 17) are hydraulic power cylinders.

8. A trailer according to any of the preceding claims, **characterized in that** said first connecting arrangement comprises guide channels (12) on the frame and members (11) on the bogie (5) displaceably received in the guide channels.

9. A trailer according to any of the preceding claims, **characterized in that** said second connecting arrangement comprises guide channels (16) on the frame and members (15) on the load carrier (14) displaceably received in the guide channels.

10. A trailer according to claim 8 or 9, **characterized in that** said members (11, 15) displaceably received in said guide channels (12, 16) are discs of synthetic material configured to slide in said guide channels.

11. A truck according to claim 8 or 9, **characterized in that** said members displaceably received in said guide channels are configured to be displaced in said guide channels by rolling therein.

12. A truck trailer combination for driving on roads allowing a large total length thereof of for example at least 24 meters, **characterized in that** it comprises a truck (20), a first trailer (1) according to claims 2 and 3 connected to the truck and a second trailer (1') according to claims 2 and 3 connected to the turntable (19) of the first trailer.

13. A method for driving a truck trailer combination according to claim 12 with loads on the load carriers (14, 14') of the trailers (1, 1') on a road allowing such a truck trailer combination for delivering the load to a location inside a geographical region with roads having a lower admissible load than the roads outside this region and only allowing a restricted length of a truck trailer combination being approximately the half of said total length, such as 12 meters, **characterized by** the following steps carried out upon reaching said geographical region:
a) disconnecting the second trailer (1') from the first trailer (1),
b) displacing the bogie (5) along the frame (2) to reduce the total length of the truck trailer combination of the truck and the first trailer to not exceed said restricted length,
c) driving to said location and unloading the first trailer (1) there,
d) driving back to the place of the second trailer (1') parking,
e) change trailer connected to the truck to the second trailer, and
repeating the steps b)-d) for the truck trailer combination with the second trailer.
